# FASCICULE DE BREVET EUROPEEN

(11) **EP 1 108 276 B1**
(45) Date de publication et mention de la délivrance du brevet: **15.05.2002**
(21) Numéro de dépôt: 99939496.8
(22) Date de dépôt: 24.08.1999
(51) Int. Cl.: H02G 1/08, H02G 9/10

(54) **DISPOSITIF DE GUIDAGE MODULAIRE**
MODULARE FÜHRUNGSVORRICHTUNG
MODULAR GUIDING DEVICE

(30) Priorité: 25.08.1998 FR 9810682
(43) Date de publication de la demande: 20.06.2001
(73) Titulaire: FRANCE TELECOM, 75015 Paris (FR)
(72) Inventeur: CORSAN, Robert, Cité PTT, F-97122 Baie Mahault (FR)
(74) Mandataire: Armengaud, Alain
(86) Numéro de dépôt international: FR9902035
(87) Numéro de publication internationale: WO0011770

(56) Documents cités:
- DE-A- 3 019 667
- DE-A- 3 320 379
- DE-C- 381 597
- DE-U- 7 730 332
- US-A- 1 865 113

## Description

La présente invention est relative à un dispositif pour le tirage de câbles pour chambre souterraine. Elle vise plus particulièrement un dispositif permettant d'assurer le guidage de câbles de fibres optiques, ou d'autres catégories de câbles (coaxiaux, vidéo, informatique, téléphonique...), voire des câbles destinés au transport d'électricité, au travers de chambres souterraines comportant des orifices d'entrée et de sortie qui ne sont pas placés dans le même plan horizontal ou vertical.

Ainsi, lorsqu'un changement de niveau, entre les orifices d'entrée et de sortie de câbles, se présente dans une chambre souterraine, il est nécessaire de placer des poulies de renvoi, communément au nombre de une, voire de deux, pour assurer le cheminement du câble entre ces deux niveaux.

Or, au cours du cheminement du câble au travers de la ou des poulies de renvoi, et au cours de l'opération de tirage, les efforts de traction provoqués à l'extrémité du ou des câbles induisent des contraintes supplémentaires et une probabilité importante de risques de détérioration de la gaine du câble, ainsi que les fibres insérées à l'intérieur de cette gaine, les contraintes engendrées pouvant même occasionner la rupture des fibres.

On connaît par le document DE 381 597 C, qui représente l'état de la technique le plus proche, un dispositif de guidage d'un câble au travers d'une chambre souterraine, cheminant entre deux directions. Ce dispositif comprend un bras supportant une poulie de guidage, ce dernier étant porté par un châssis cheminant au-dessus de la chambre. De plus, le châssis comporte un système de manivelle permettant de décaler transversalement l'axe du bras support de poulie.

Les dispositifs connus comportent un système de guidage muni d'une pluralité de galets en forme de diabolo qui sont juxtaposés et maintenus entre deux flasques coudés. Ces flasques en raison de leur rayon de courbure, impriment un changement de direction de 45, 90, voire 180°, aux câbles qui cheminent tangentiellement aux diabolos, ce flasque étant pourvu d'une patte faisant saillie latéralement et permettant son accrochage à un pied support solidaire de la chambre souterraine. Le document US 1 865 113 A décrit un dispositif de guidage comportant une pluralité de galets maintenus entre deux flasques.

L'inconvénient principal de ce type de dispositif modulaire de guidage réside particulièrement dans le fait qu'il n'autorise un réglage que selon une seule direction, en X, en Y, ou en Z.

La présente invention vise donc à pallier ces inconvénients, en proposant un dispositif modulaire de guidage qui soit, non seulement adapté aux caractéristiques des câbles (rayon de courbure minimum admis sur le câble), mais qui s'adapte facilement à toute configuration particulière rencontrée lors du tirage d'un câble au travers d'une chambre souterraine, et principalement d'autoriser un réglage dans plusieurs directions.

La solution du problème exposé ci-dessus réside dans la partie caractérisante de la revendication 1.

D'autres caractéristiques et avantages de la présente invention ressortiront de la description faite ci-après, en référence aux dessins annexés qui en illustrent un exemple de réalisation dépourvu de tout caractère limitatif. Sur les figures :
- La figure 1 est une vue en coupe, en élévation latérale, d'une chambre souterraine, dont les orifices d'entrée et de sortie de câble ne sont pas positionnés dans le même plan vertical, cette chambre étant pourvue de dispositifs faisant l'objet de l'invention ;
- la figure 2 est une vue de dessus d'une chambre souterraine, dont les orifices d'entrée et de sortie de câble ne sont pas positionnés dans le même plan horizontal, cette chambre étant pourvue de dispositifs faisant l'objet de l'invention ;
- la figure 3 est une vue en coupe et en élévation latérale d'un dispositif de guidage selon l'invention ;
- la figure 4 est une vue en coupe et de côté d'un dispositif de guidage selon l'invention ;
- la figure 5 est une vue en détail de la patte de fixation.

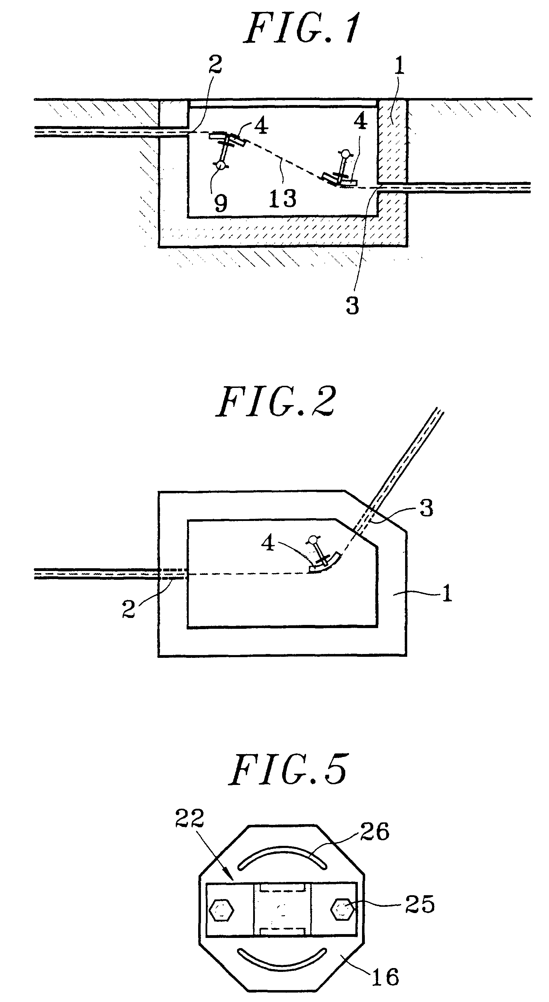

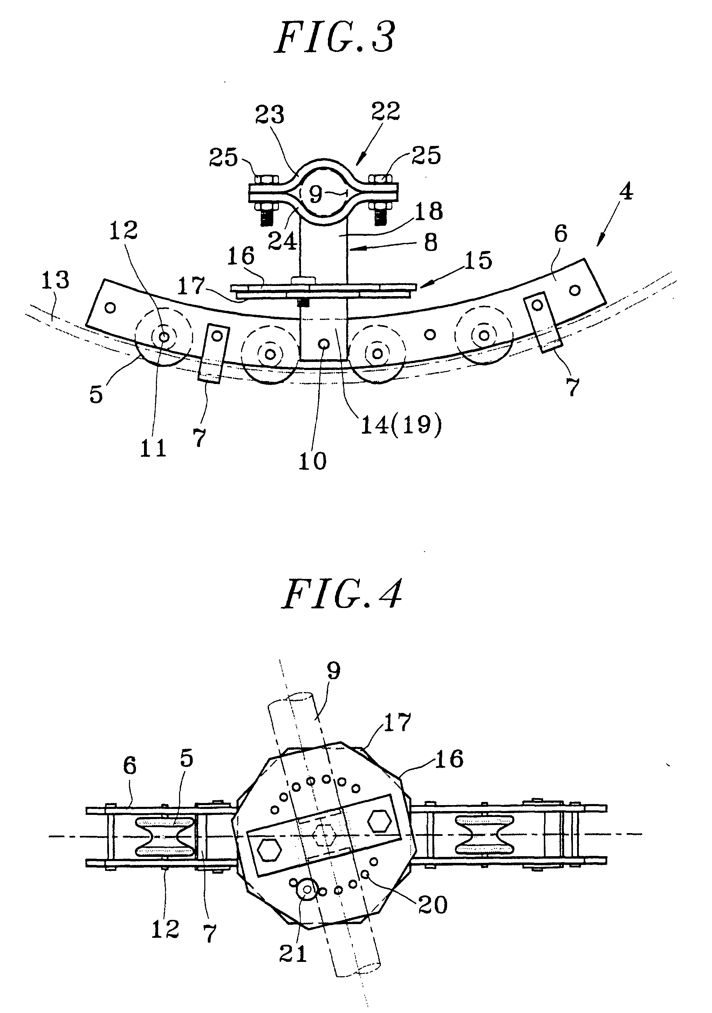

Selon un mode préféré de réalisation du dispositif faisant l'objet de l'invention, celui-ci est destiné à être positionné à l'intérieur d'une chambre souterraine pourvue d'orifices d'entrée et de sortie de câble, ces orifices n'étant pas positionnés dans le même plan horizontal et vertical, réalisant un changement de direction en L dans chacun des plans (cf. se reporter aux figures 1 et 2). Sur ces figures, la référence 1 représente la chambre souterraine, les références 2 et 3 les orifices d'entrée et de sortie, le trait pointillé le câble qui chemine entre ces deux orifices et qui tangente le ou les dispositifs de guidage modulaire 4.

Un dispositif modulaire 4 faisant l'objet de l'invention (cf. figure 3) comporte une pluralité de galets 5 conformés en diabolos, réalisés dans un matériau plastique ou métallique, qui sont juxtaposés et maintenus en position par l'intermédiaire de flasques 6. A cette fin, chacun des galets est traversé de part en part par un orifice 11 permettant le passage d'un axe 12, éventuellement monté sur roulement, dont les extrémités sont connectées par des moyens connus (vissage, circlips, emboîtage, soudage...) aux parois de chacun des flasques 6.

Les flasques 6 présentent un profil curviligne qui détermine suivant l'intensité du rayon de courbure, un changement de direction à 45, 90, voire 180° entre les deux extrémités des deux flasques 6.

L'assemblage des parois externes formant le contour de chacun des galets génère un rayon de courbure sur lequel tangente un câble 13 maintenu au contact des surfaces de roulement de chacun des galets, par l'intermédiaire de pontets 7 en forme de U, également solidaires des parois du flasque (cf. figure 3).

Sensiblement à mi-longueur des flasques 6, mais de façon non limitative (à un endroit quelconque du rayon de courbure), on prévoit de disposer un pied support 8. Ce pied support 8 permet de relier le dispositif de guidage modulaire 4 à un organe support 9 solidaire de la chambre souterraine. Cet organe support est représenté sur la figure 4.

L'une des extrémités du pied support 8 est formé par une patte unique 14 faisant saillie ou une patte double en U reliée par des moyens connus 10 (vis-écrou, point de soudure, axe...) aux parois des flasques de guidage 6.

En outre, on interpose entre les deux extrémités du pied support 8 un moyen d'articulation 15.

Ce moyen d'articulation 15 permet d'orienter dans les trois dimensions le dispositif de guidage modulaire 4 par rapport à l'organe support 9 en fonction des dispositions relatives entre les orifices 2, 3 d'entrée et de sortie du ou des câbles, cheminant à l'intérieur de la chambre souterraine.

Ainsi, selon un premier mode de réalisation du moyen d'articulation 15, celui-ci comporte deux plaques 16, 17 placés perpendiculairement par rapport à l'axe principal du pied support 8, les plaques 16, 17 et leurs portions de pied support respectives 18, 19 se faisant face et pouvant pivoter l'une par rapport à l'autre grâce à une pluralité d'orifices 20 uniformément répartis sur la surface de chacune des plaques 16, 17 (cf. figure 4).

La position angulaire entre ces deux plaques est figée à l'aide d'un moyen de coopération 21 du type vis ou autre, passant au travers de deux orifices 20 des plaques 16, 17.

Selon un deuxième mode de réalisation du moyen d'articulation 15 (se reporter à la figure 5), celui-ci comporte deux plaques 16, 17 positionnées de manière similaire au premier mode de réalisation, l'une d'elles comprenant au moins une lumière 26, notamment oblongue, dans laquelle peut circuler un organe de guidage faisant saillie par rapport à l'autre plaque.

Selon un troisième mode de réalisation du moyen d'articulation 15 (non représenté sur les figures), celui-ci comporte entre deux portions formant le pied support 8, une rotule.

Quel que soit le mode de réalisation, l'extrémité libre du pied support 8 dispose d'un étrier 22 en deux parties 23, 24 permettant, grâce à des organes de serrage 25, de solidariser le pied support 8 avec l'organe support 9.

La présente invention telle que décrite précédemment offre de multiples avantages, car elle permet de s'adapter, avec un nombre réduit de dispositifs de guidage modulaire, aux caractéristiques des câbles (rayon de courbure dynamique minimum admis sur le câble - ce qui est déterminant pour la bonne conduite des opérations de tirage de câble), ainsi qu'aux configurations particulières rencontrées sur les chantiers.

Il demeure bien entendu que la présente invention n'est pas limitée aux exemples de réalisation décrits et représentés ci-dessus, mais qu'elle en englobe toutes les variantes.

## Revendications

1. Dispositif de guidage modulaire (4) pour câble à fibres optiques ou pour câble électrique à l'intérieur d'une chambre souterraine, ledit dispositif comportant une pluralité de galets (5) juxtaposés et maintenus en position par l'intermédiaire de flasques (6), ces flasques (6) disposant d'un pied support (8) adapté à relier ledit dispositif de guidage modulaire (4) à un organe support (9) solidaire de la chambre souterraine, le pied support (8) comportant entre ses deux extrémités un moyen d'articulation (15) conçu de façon à orienter ledit dispositif de guidage modulaire (4), en fonction d'une part de la position de l'organe support (9) dans ladite chambre souterraine et d'autre part des dispositions relatives entre des orifices (2, 3) d' entrée et de sortie du ou des câbles, cheminant à l'intérieur de ladite chambre souterraine, **caractérisé en ce que** le moyen d'articulation (15) comporte deux plaques (16, 17) placés perpendiculairement par rapport à l'axe principal du pied support (8), les plaques (16, 17) et leurs portions de pied support respectives (18, 19) se faisant face et pouvant pivoter l'une par rapport à l'autre grâce à une pluralité d'orifices (20) uniformément répartis sur la surface de chacune des plaques (16, 17), la position angulaire entre ces deux plaques étant figée à l'aide d' un moyen de coopération (21), passant au travers de deux orifices (20) des dites plaques (16, 17).

2. Dispositif selon la revendication 1, **caractérisé en ce que** l'une des plaques (16, 17) du moyen d'articulation (15) comprend au moins une lumière (26), dans laquelle circule un organe de guidage faisant saillie par rapport à l'autre plaque.

3. Dispositif selon l'une des revendications 1 ou 2, **caractérisé en ce que** l'extrémité libre du pied support (8) dispose d'un étrier (22) en deux parties (23, 24) permettant, grâce à des organes de serrage (25), de solidariser le pied support (8) avec l'organe support (9).

## Claims

1. Modular guide device (4) for fibre optic cable or electrical cable inside an underground chamber, said device having a plurality of rollers (5) which are juxtaposed and kept in position by end-plates (6), these end-plates (6) having a support foot (8) for connecting said modular guide device (4) to a support member (9) integral with the underground chamber, the support foot (8) having, between its two ends, a means of articulation (15) designed to orientate said modular guide device (4) as a function, on the one hand, of the position of the support member (9) in said underground chamber and, on the other hand, of the relative dispositions between inlet and outlet orifices (2, 3) of the cable(s), leading to the interior of said underground chamber, **characterised in that** the means of articulation (15) comprises two plates (16, 17) placed perpendicularly relative to the main axis of the support foot (8), the plates (16, 17) and their respective support foot portions (18, 19) which face one another and can be pivoted relative to one another owing to a plurality of orifices (20) uniformly distributed on the surface of each of the plates (16, 17), the angular position between these two plates being fixed with the aid of a means of cooperation (21) passing through two orifices (20) of said plates (16, 17).

2. Device according to claim 1, **characterised in that** one of the plates (16, 17) of the means of articulation (15) comprises at least one aperture (26) in which a guide member which projects with respect to the other plate circulates.

3. Device according to any one of claims 1 or 2, **characterised in that** the free end of the support foot (8) has a clamp (22) in two parts (23, 24) which allows the support foot (8) to be connected to the support member (9) by means of securing members (25).

## Patentansprüche

1. Modulare Führungsvorrichtung (4) für ein Kabel mit optischen Fasern oder ein elektrisches Kabel im Inneren einer unterirdischen Kammer, wobei die Vorrichtung eine Mehrzahl von Rollen (5) aufweist, die nebeneinander angeordnet und in ihrer Stellung gehalten sind durch Flansche (6), die einen Tragfuß (8) aufweisen, der dazu dient, die modulare Führungsvorrichtung (4) mit einem Trägerelement (9) zu verbinden, das fest mit der unterirdischen Kammer verbunden ist, wobei der Tragfuß (8) zwischen seinen zwei Enden eine Gelenkeinrichtung (15) aufweist, welche geeignet ist, die modulare Führungsvorrichtung (4) in Abhängigkeit von einerseits der Position des Tragelements (9) in der unterirdischen Kammer und andererseits der relativen Anordnungen zwischen den Einlaßund Auslaßöffnungen (2, 3) des oder der Kabel, welche das Innere der unterirdischen Kammer durchlaufen, zu orientieren, **dadurch gekennzeichnet, daß** die Gelenkeinrichtung (15) zwei Platten (16, 17) aufweist, die bezüglich der Hauptachse des Tragfußes (8) senkrecht angeordnet sind, wobei die Platten (16, 17) und ihre jeweiligen Tragfußteile (18, 19) einander zugewandt sind und in bezug aufeinander schwenkbar sind durch eine Mehrzahl von Öffnungen (20), die gleichmäßig über die Fläche jeder der Platten (16, 17) verteilt sind, wobei die Winkelposition zwischen diesen zwei Platten mit Hilfe einer Verbindungsvorrichtung (21) festgestellt wird, welche zwei Öffnungen (20) der Platten (16, 17) durchsetzt.

2. Vorrichtung nach Anspruch 1, **dadurch gekennzeichnet, daß** die eine der Platten (16, 17) der Gelenkeinrichtung (15) mindestens ein Langloch (26) aufweist, in dem ein Führungselement bewegbar ist, das bezüglich der anderen Platte vorsteht.

3. Vorrichtung nach einem der Ansprüche 1 oder 2, **dadurch gekennzeichnet, daß** das freie Ende des Tragfußes (8) eine Bügelklemme (22) mit zwei Teilen (23, 24) aufweist, welche mittels Klemmelementen (25) die Befestigung des Tragfußes (8) am Trägerelement (9) ermöglicht.
